Europäisches Patentamt

European Patent Office

Office européen des brevets

(11) Publication number: **0 355 728**
A2

# EUROPEAN PATENT APPLICATION

(21) Application number: 89115239.9

(51) Int. Cl.⁴ **C09K 3/10**

(22) Date of filing: 18.08.89

(30) Priority: 19.08.88 JP 205786/88

(43) Date of publication of application:
28.02.90 Bulletin 90/09

(84) Designated Contracting States:
AT BE CH DE ES FR GB GR IT LI LU NL SE

(71) Applicant: HYSOL LIMITED
2050 Kamiyabe Totsuka-ku
Yokohama City Kanagawa Prefecture,
245(JP)

(72) Inventor: Sagami, Yosuke
5-21, Chiyogaoka 5-chome Asou-ku
Kawasaki City Kanagawa Prefecture(JP)
Inventor: Inagaki, Akihiro
12-7, Yutakacho 5-chome
Shinagawa-ku Tokyo(JP)
Inventor: Kajiwara, Yozo
98-1, Mitsukyo Seya-ku
Yokohama City Kanagawa Prefecture(JP)
Inventor: Yoshigahara, Haruyuki
2044, Minamiyana
Hatano City Kanagawa Prefecture(JP)

(74) Representative: Vossius & Partner
Siebertstrasse 4 P.O. Box 86 07 67
D-8000 München 86(DE)

(54) An ultraviolet ray transmissive protection or support material for an ultraviolet ray sensitive or transmissive element.

(57) A special epoxy resin material has been found to give a cured product having excellent ultraviolet-ray transmission. The cured product also has excellent heat resistance and moisture resistance and also high mechanical strength. This epoxy resin material therefore is very useful as a protection or support material for an ultraviolet-ray sensitive element such as EPROM., CCD, TFT, laser disk, etc. and also as an ultraviolet-ray transmissive ink, optical material or adhesive. The special epoxy resin material is featured by its chemical construction that it has a glycidyl group or glycidyl groups coupled to a nitrogen atom or nitrogen atoms of a triazine ring of an isocyanuric acid.

EP 0 355 728 A2

An ultraviolet ray transmissive protection or support material for an ultraviolet ray sensitive or transmissive element

The present invention relates to an ultraviolet ray transmissive protection or support material, for example, sealin material such as sealant or sealing parts, substrate material or coating material, an ultraviolet ray transmissive ink, an ultraviolet ray transmissive optical material and an ultraviolet ray transmissive adhesive, for an ultraviolet ray sensitive or transmissive element.

The present invention further relates to an ultraviolet ray sensitive apparatus comprising an ultraviolet ray sensitive element protected or supported by using these materials, for example, EPROM (Erasable Programmable Read Only Memory), CCD (Charge Coupling Device), TFT (Thin Film Transistor), laser disc, laser card or laser tape, and a process for the production thereof.

Up to present, scaling of an ultraviolet ray sensitive element, for example an integrated circuit element, which is capable of erasion by the ultraviolet rays and is programmable, such as EPROM, an ultraviolet ray sensitive CCD, or the like has been carried out by using a special glass such as quartz glass or borosilicate glass in an ultraviolet ray receiving part of the element as a window material.

In producing EPROM or CCD by using such special glass, there is a problem not only that working efficiently is low but also that mechanical strength is low, that is, it tends to break out as the glass is made thinner. Particularly in use for a thin type integrated circuit apparatus such as an IC card requiring high strength, it has been strongly demanded to solve such problem as above.

As a thermosetting resin material to replace such special glass, there is a silicone resin material (free from any filler). Its cured product transmits ultraviolet rays and has excellent heat resistance, but has only low mechanical strength whereas high moisture permeability. It therefore is not suitable for use as a sealing material by itself. Thermosetting epoxy resin materials such as bisphenol A type, phenol novolak type, cresol novolak type, cycloaliphatic type epoxy resin materials have excellent heat resistance and high mechanical strength and so are widely used for sealing general integrated circuits; but they absorb and almost do not transmit ultraviolet rays.

It has been proposed to effect sealing by combining these silicone resin materials and epoxy resin materials, that is, by using silicone resin materials at ultraviolet ray transmitting parts and cresol novolak type epoxy resin materials at ultraviolet ray non-transmitting parts and by employing a two-stage molding process, as described in Japanese Patent Laid-Open No. 83,338/85. Such technique as above however requires two kinds of mold and its process is complicated. Moreover, it cannot completely solve the problem that the silicone resin materials have only insufficient mechanical strength.

It is the object of the present invention to provide an ultraviolet ray transmissive protection or support material which well transmits ultraviolet rays and at the same time has excellent heat resistance and moisture resistance and also high mechanical strength.

This object could be solved through the surprising finding that a special epoxy resin material, that is a cured product of an epoxy compound having a glycidyl group or glycidyl groups coupled to a nitrogen atom or nitrogen atoms of a triazine ring of an isocyanuric acid, shows the above-mentioned desirable performances.

Accordingly, this special epoxy resin material found by the present inventors can effectively be used for sealing an ultraviolet-ray sensitive element such as EPROM or CCD.

The present invention provides a sealing material, particularly a sealant and sealing parts for an ultraviolet ray sensitive element. Furthermore, it provides by the merits of the ultraviolet ray transmission and excellent physical properties of the above mentioned special epoxy resin material, an ultraviolet-ray transmissive protection or support material (for example, in addition to said sealing material, a substrate material or coating material),an ink, optical material and adhesive for an ultraviolet-ray sensitive or transmissive element.

For example, the above mentioned special epoxy resin material is particularly useful as a substrate material for TFT, a laser disc, a laser card or a laser tape, to be formed by means of a laser beam in a range of ultraviolet rays of approximately 300 nm. Up to the present, the above mentioned special glass has been used for the substrate material of TFT, but it has the disadvantages that it tends to break out as it is made thinner, it becomes heavy as it is made thicker, and it is weak against heat and shock. Silicone resin alone is of low strength and so cannot be used. On the other hand, ultraviolet rays absorbing resins are burnt by the energy the laser beam and so cannot be used, either. These situations apply also to a laser disc and a laser card and, as to a laser tape which requires flexibility, there has been no substrate material known as allowing use of a laser beam in the range of ultraviolet ray. The optical material is for example a lens and the adhesive is for example one for adhering ultraviolet ray transmissive element such as ultraviolet ray transmissive special glass lenses.

As for the epoxy compound, it is preferable to use triglycidyl isocyanurate. As for the curing agent, it is possible to use an acid anhydride curing agent or an amine curing agent, but it is preferable to use an aliphatic or cycloaliphatic acid anhydride, particularly hexahydrophthalic acid anhydride or methylhexahydrophthalic acid anhydride. All of these materials are available in the market.

As long as ultraviolet-ray transmission property, heat resistance, moisture resistance and mechanical strength are not undesirably impaired, it is possible in accordance with the purpose and the use of the product to add various additional components for example a curing accelerator, an inorganic filler e.g. micropowder silica, a surface control agent (a coupling agent or an internal releasing agent) and/or an antiflaming agent.

Similarly, other epoxy resin materials or silicone resin materials may be added as occasion demands.

For example, hydrogenated bisphenol A glycidyl ether is in a liquid phase and so enhances handling property of the triglycidyl isocyanurate, which is in a powder condition, in manufacturing and working process steps. Further, silicone resin material can be added or used by itself as a part of a sealing material for the purpose of relieving any internal stress of metallic wiring portions by the merits of its softness. thereof.

It is in general advantageous and possible to determine the ratio of amounts of components so that ultraviolet rays of 250-320 nm wavelength may be well transmitted.

As for the ultraviolet ray sensitive element, an integrated circuit element, which enables erasion of stored information by ultraviolet rays and is programmable, that is, enables electric writing in of informations, for example, an EPROM particularly an EPROM constituted by a CMOS or a double layer gated MOS, may be mentioned. It may also be applied to an OTPROM or an ultraviolet ray detection sensor for example an ultraviolet ray sensitive CCD. It is further possible to apply to a TFT to be produced by an ultraviolet ray laser beam, a laser disc, card or tape to store information by means of an ultraviolet ray laser beam.

The sealing may be carried out either by sealing the entire element by the sealing material alone or by using the sealing material for an entirety or a part of ultraviolet ray transmission part. In accordance with a sealing method to be employed, for example in a resin sealing method, the sealing material may be used for an entirety or a part of the sealing resin, and in an airtight sealing method, the sealing material may be used for sealing an entirety or a part of a cavity in a package or constituting a part or an entirety of the package itself.

As for the resin sealing method, any of methods usable for sealing by epoxy resins may be selected appropriately in accordance with desired product, for example, from a casting method such as potting, dipping, casting or drip-coating, a transfer molding method, an epoxy pellet packing method or a screen printing method.

The epoxy resin and the curing agent may be included separately as a combination so as to be mixed together just before curing or together as a previously mixed mixture directly curable as it is, for use as a sealant, a coating material, an ink or an adhesive. It is also possible to make them previously cured in a desired shape as a sealing part for constituting for example an entirety or a part of the above mentioned airtight sealing package, as a substrate material or an optical material.

The present invention has thus enabled to produce a highly ultraviolet ray transmissive ultraviolet ray sensitive apparatus of good working efficiency and high mechanical strength, without need to use any special glass.

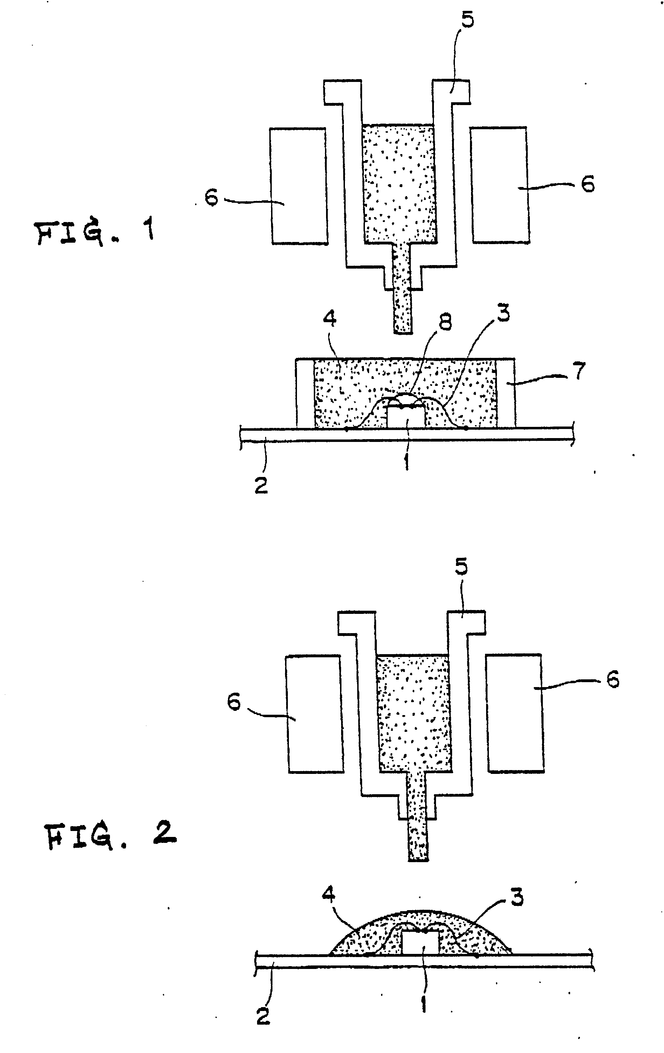

Fig. 1 and Fig. 2 show cross sections illustrating embodiments of the present invention for effecting resin sealing of an EPROM element by casting and drip-coating, respectively.

Some embodiments of the present invention will be explained in detail hereinunder.

1. Production of cured products

Components as shown in the following Table 1 were mixed to prepare compositions.

Table 1

| Example No. | Components | Weight ratio |
|---|---|---|
| Example 1 | TGIC<br>HHPA<br>butanol | 100<br>123<br>1 |
| Example 2 | TGIC<br>Epoxy-A<br>MHHPA<br>zinc caprylate | 90<br>10<br>102<br>1 |
| Example 3 | TGIC<br>Epoxy-A<br>TEPA | 60<br>40<br>14 |
| Example 4 | Epoxy-B<br>TEPA | 100<br>14 |
| Example 5 | Epoxy-B<br>Epoxy-C<br>PA<br>zinc caprylate | 60<br>40<br>30<br>3 |

The components used are as follows:

(A) Resin Materials

TGIC . . . triglycidyl isocyanurate
Epoxy-A . . . hydrogenated bisphenol A diglycidyl ether
Epoxy-B . . . bisphenol A type epoxy resin (trade name "SHELL 828")
Epoxy-C . . . cycloaliphatic epoxy resin (trade name "CTBA-GEIGY CY 175")

(B) Curing Agents

HHPA . . . hexahydrophthalic anhydride
MHHPA . . . methyl hexahydrophthalic anhydride
TEPA . . . tetraethylene pentamine
PA . . . phthalic anhydride

(C) Curing Accelerators

butanol
zinc caprylate

The compositions of the above Examples 1-3 are within the scope of the present invention and those of the above Examples 4-5 are outside the scope of the present invention. These compositions of the Examples 1-5 were cured under conditions of at 150°C for 3 hours (Examples 1, 2 and 5) and at 50°C for 4 hours (Examples 3 and 4), respectively, to obtain cured products each of 1 mm thickness.

2. Ultraviolet ray transmission tests

The cured products obtained as above were subjected to irradiation with ultraviolet rays having a wavelength of 290 nm and measurement was made as to percent transmission. Results are shown in the following Table 2.

Table 2

| Example No. | Ultraviolet ray percent transmission |
|---|---|
| Example 1 | 59 |
| Example 2 | 30 |
| Example 3 | 32 |
| Example 4 | 1.2 |
| Example 5 | 0.8 |

3. EPROM erasion tests

Cured products prepared in the same manner as above but in a thickness of 0.5 mm were placed on 64K EPROM element and subjected to ultraviolet ray erasion by means of an EPROM erasion apparatus "MEMORASE C-25: 6W·sec/cm²" (product of UVP, Inc., U.S.A.). Measurements were made as to times required for the erasion, by means of a memory tester (product of Advantest Inc., U.S.A.). Results are shown in the following Table 3.

Table 3

| Example No. | Erasion time (min.) |
|---|---|
| Example 1 | 15 |
| Example 2 | 29 |
| Example 3 | 27 |
| Example 4 | * |
| Example 5 | * |

*. . . not measurable; not erased even after lapse of one hour

4. Resin sealing of an EPROM

Some embodiments of resin sealing of an EPROM are illustrated in the attached Figs. 1 and 2 by way of cross sections. Fig. 1 illustrates casting and Fig. 2 illustrates drip coating of the resin material onto an EPROM. In these figures, an EPROM element 1 having metallic wiring 3 placed on a substrate 2 is sealed by an epoxy resin sealing body 4 applied by an epoxy resin dispenser syringe 5 provided with a heater 6. In Fig. 1, the epoxy resin sealing body 4 is cast in a mold 7 and a layer 8 of silicone rubber or silicone gel is previously coated on the surface of EPROM element for relieving any internal stress. In Fig. 1, the resin sealing body is cast to give a flat surface, but in Fig. 2, the resin sealing body is drop-coated to give a convex surface.

5. Reliability evaluation test of an EPROM

Reliability evaluation tests were carried out as to an EPROM obtained by drip-coating a 64K EPROM element as illustrated in Fig 2 with the composition of the above Example 1. The results showed that even after any of treatments under such conditions as (a) leaving at a temperature 85°C, a relative humidity 85%, for continuous 1,000 hours, (b) leaving at a temperature 60°C, a relative humidity 90%, for continuous 3,000 hours, (c) leaving at a temperature 85°C for continuous 1,000 hours, (d) leaving at a temperature -40°C for continuous 1,000 hours, and (e) subjecting to repetition of a cycle comprising exposure to -40°C for 30 minutes and exposure to 80°C for 30 minutes for 800 times, no troubles occurred in data retention property which was measured by an apparatus "GANG PROGRAMMER" (product of Advantest Inc., U.S. A.). Further, it was found that data erasion could be accomplished without fail even after the above treatments, by subsequently performing the erasion tests as mentioned above.

As it is clear from the detailed explanation given above, the present invention has enabled to produce a highly ultraviolet ray transmissive ultraviolet ray sensitive apparatus of good working efficiency and high mechanical strength, without need to use any special glass.

Although in the above mentioned embodiments, the present invention is explained concretely as to resin sealing of an EPROM as an example, it is clear that the present invention is not limited to these embodiments, but is applicable also to other various ultraviolet ray sensitive elements, for example ultraviolet ray detection sensor such as CCD, for providing a sealing body of various shapes such as a layer form, a lens form, or the like, for providing a substrate material for a TFT, a laser disk, card or tape, or for providing a coating material, an ink, an optical material or an adhesive.

## Claims

1. An ultraviolet ray transmissive protection or support material for an ultraviolet ray sensitive or transmissive element comprising an epoxy compound having a glycidyl group or glycidyl groups coupled to a nitrogen atom or nitrogen atoms of a triazine ring of an isocyanuric acid and a curing agent therefor, separately as a combination or together as a mixture, or a cured product of them.

2. The material as set forth in claim 1 wherein the epoxy compound is triglycidyl isocyanurate.

3. The material as set forth in claim 1 wherein the curing agent is an acid anhydride curing agent or an amine curing agent.

4. The material as set forth in claim 3 wherein the acid anhydride curing agent is an aliphatic or cycloaliphatic acid anhydride curing agent.

5. The material as set forth in claim 1 wherein the epoxy compound is triglycidyl isocyanurate and the curing agent is hexahydrophthalic acid anhydride or methylhexahydrophthalic acid anhydride.

6. An ultraviolet ray transmissive sealing material for an ultraviolet ray sensitive element comprising an epoxy compound having a glycidyl group or glycidyl groups coupled to a nitrogen atom or nitrogen atoms of a triazine ring of an isocyanuric acid and a curing agent therefor, separately as a combination or together as a mixture, or a cured product of them.

7. An ultraviolet ray transmissive sealant for an ultraviolet ray sensitive element comprising an epoxy compound having a glycidyl group or glycidyl groups coupled to a nitrogen atom or nitrogen atoms of a triazine ring of an isocyanuric acid, and a curing agent therefor , separately as a combination or together as a mixture, or a cured product of them.

8. The sealant as set forth in claim 7 for use in sealing, as the ultraviolet ray sensitive element, an EPROM or a charge coupled device.

9. Ultraviolet ray transmissive sealing parts for an ultraviolet ray sensitive element comprising a cured product of an epoxy compound having a glycidyl group or glycidyl groups coupled to a nitrogen atom or nitrogen atoms of a triazine ring of an isocyanuric acid and its curing agent.

10. The sealing parts as set forth in claim 9 for use in sealing, as the ultraviolet ray sensitive element, an EPROM or a charge coupled device.

11. An ultraviolet ray transmissive substrate material for an ultraviolet ray sensitive element comprising a cured poduct of an epoxy compound having a glycidyl group or glycidyl groups coupled to a nitrogen atom or nitrogen atoms of a triazine ring of an isocyanuric acid and a curing agent therefor .

12. An ultraviolet ray transmissive coating material for an ultraviolet ray sensitive or transmissive element comprising an epoxy compound having a glycidyl group or glycidyl groups coupled to a nitrogen atom or nitrogen atoms of a triazine ring of an isocyanuric acid and a curing agent therefor , separately as a combination or together as a mixture.

13. An ultraviolet ray transmissive ink for an ultraviolet ray sensitive or transmissive element comprising an epoxy compound having a glycidyl group or glycidyl groups coupled to a nitrogen atom or nitrogen atoms of a triazine ring of an isocyanuric acid and a curing agent therefor , separately as a combination or together as a mixture.

14. An ultraviolet ray transmissive optical material for an ultraviolet ray sensitive element comprising a cured product of an epoxy compound having a glycidyl group or glycidyl groups coupled to a nitrogen atom or nitrogen atoms of a triazine ring of an isocyanuric acid and a curing agent therefor .

15. The material as set forth in claim 14 which is formed in a lens shape.

16. An ultraviolet ray transmissive adhesive for an ultraviolet ray sensitive or transmissive element comprising an epoxy compound having a glycidyl group or glycidyl groups coupled to a nitrogen atom or nitrogen atoms of a triazine ring of an isocyanuric acid and a curing agent therefor , separately as a combination or together as a mixture.

17. An ultraviolet ray sensitive apparatus comprising an ultraviolet ray sensitive element sealed by a cured product of an epoxy compound having a glycidyl group or glycidyl groups coupled to a nitrogen atom or nitrogen atoms of a triazine ring of an isocyanuric acid and a curing agent therefor .

18. The apparatus as set forth in claim 17 wherein the ultraviolet ray sensitive element used is an integrated circuit element.

19. The apparatus as set forth in claim 18 wherein the integrated circuit element used is an EPROM constituted by a CMOS or a double layer gated MOS, or a charge coupled device.

20. A process for the production of an ultraviolet ray sensitive apparatus characterized in that an ultraviolet ray sensitive element is sealed by means of an epoxy compound having a glycidyl group or glycidyl groups coupled to a nitrogen atom or nitrogen atoms of a triazine ring of an isocyanuric acid and a curing agent therefor , or a cured porduct of them.

21. The process as set forth in claim 20 characterized in that an integrated circuit element which is capable of erasion by ultraviolet rays and is programmable is sealed by a casting method, a transfer molding method, an epoxy pellet packing method, a screen printing method or an airtight sealing method.

22. The method as set forth in claim 21 wherein as the casting method, means of potting, dipping, casting or drip-coating is used.

23. A semiconductor circuit formed by using as a substrate material, a cured product of an epoxy compound having a glycidyl group or glycidyl groups coupled to a nitrogen atom or nitrogen atoms of a triazine ring of an isocyanuric acid and a curing agent therefor, supporting thereon an ultraviolet ray sensitive semiconductor material and irradiating the ultraviolet ray.

24. The circuit as set forth in claim 23 which is formed as a thin film transistor.

25. A memory medium capable of writing in or reading out by means of ultraviolet rays formed by using as a substrate material, a cured product of an epoxy compound having a glycidyl group or glycidyl groups coupled to a nitrogen atom or nitrogen atoms of a triazine ring of an isocyanuric acid and a curing agent therefor , and supporting thereon an ultraviolet ray absorptive or reflective material.

26. The medium as set forth in claim 25 which is formed as a laser disc, a laser card or a laser tape.

FIG. 1

FIG. 2